# EUROPEAN PATENT APPLICATION

(11) **EP 1 217 225 A1**
(43) Date of publication of application: **26.06.2002**
(21) Application number: 01129656.3
(22) Date of filing: 12.12.2001
(51) Int. Cl.: F16B 12/32

(54) **Fixing block**

(30) Priority: 13.12.2000 GB 0030329
(71) Applicant: Form Fin Limited, North Moons Moat, Redditch, Worcestershire B98 9HL (GB)
(72) Inventor: Harvey, Charles John, Redditch Worcestershire B98 9NQ (GB)
(74) Representative: Wardley, Diana Mary

(57) **Abstract**

A fixing for releasably securing a first member (2) to a second member (7) comprises: a locator (3) extending from the first member (2); and a lock (8) having a body and a fastener (11), and an opening (16) for receipt of the locator (3) and being moveable with respect to the second member (7) between a first position in which the locator (3) is not within the opening (16), and a second position in which the locator (3) is engaged in the opening (16); in which the action of securing the lock (8) retains the locator (3) in place within the fastener (11) and secures the lock (8) in relation to the second member (7).

The lock (8) may be slideably mounted in the second member (7), and further protrusions (4, 15) on the lock (8) or the first member (2) may assist in fixing the two members (2, 7) in place.

The fixing is particularly suitable for self assembly furniture, but has many other applications.

## Description

This invention relates to fixings that may releasably connect and secure one member to another member. It has particular application when the members are structural joints for self assembly furniture, but has far wider functionality. It is of use whenever it is advantageous to adjust the members of a structure before they are finally secured.

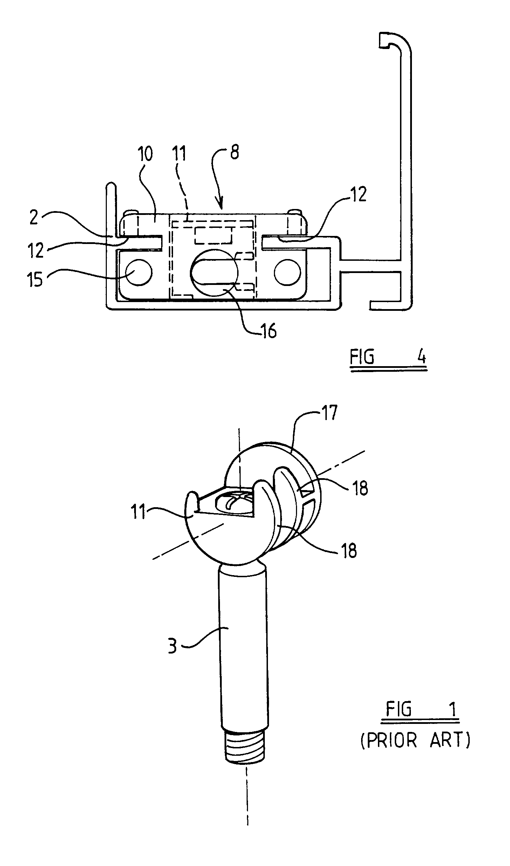

A typical known fixing for self-assembly furniture is shown in Figure 1. When this fitting is used to fix two members together, the fastener 11 is contained in the body of one of the members and the locator, a pin 3, is fixed by its screw thread in a hole in the surface of the body of the other member. The two members may be located relative to each other by sliding the pin 3 into a cylindrical well in the other member until the head of the pin 3 abuts the fastener 11 when the fastener is in its unlocked position. The two members may then be secured relative to each other by turning the fastener so that it traps the head of the pin 3, as shown in Figure 1. This arrangement has a number of disadvantages. The pin 3 and the fastener 11 can only be secured together when the head of the pin 3 is in a specific position in relation to the fastener, making it impossible to adjust the position of the two members relative to each other before securing them. Furthermore this fixing does not prevent the two members rotating with respect to each other about the pin 3.

In fact these problems are common to all current fixings. It is often necessary to adjust the position of structural members of self-assembly furniture before finally securing them. However, with current fixings it is difficult to maintain the structural members of self assembly furniture in correct alignment whilst adjusting and securing them. Moreover securing the members before the structure is complete tends to result in misalignment.

The present invention addresses this problem, and is relevant whenever the positions of members in a structure may need adjustment before finally being secured.

This invention provides a fixing for releasably securing a first member to a second member that comprises: a locator extending from the first member; and a fastener; characterised in that it further comprises a lock having a body and a fastener, and an opening for receipt of the locator and being moveable with respect to the second member between a first position in which the locator is not within the opening, and a second position in which the locator is engaged in the opening; in which the action of securing the lock retains the locator in place within the fastener and secures the lock in relation to the second member.

Thus this invention enables one member to be positioned relative to another member and retained reasonably securely in the desired position before being locked firmly into place. The first member is essentially attached to a moveable part of the second member, that, when locked secures itself to both the first and the second member, preventing further relative movement. Using this device a structure may be built and adjusted without such necessity to support the various members and without having to fix them finally in position.

Preferably the lock is slideably mounted with respect to the second member. This enables the relative positions of the members to be smoothly adjusted.

The lock may further comprise locating protrusions that locate in respective apertures in the first member. These further secure the two members, and prevent relative rotation of the members. Preferably when the lock is slideably mounted with respect to the second member, the length of the locating protrusions determines the degree of relative sliding that may occur. Advantageously the protrusions are an interference fit in the apertures. This increases the security of the fixing.

The fixing may further comprise formations on the second member that abut the lock when secured. This limits the freedom of movement of the lock with respect to the member and provides a defined point for securing the lock.

A lock with such fixings may further comprise corresponding formations that constrain movement of the lock with respect to the second member, and which abut the formations on the second member when the lock is locked against them. These assist in defining one end of the lock's range of movement. The formations are preferably hook shaped, one extending from each lateral side of the lock, to hook over the formations on the second member, which are preferably pins.

The locator may be a pin of elongate cylindrical form, which may be received into a respective hole in the lock. This provides a simple and secure temporary fixing. Preferably the pin has a head and a neck and is so constructed that the head may pass into a fastener in the lock when the lock is unlocked, and the locking mechanism involves the fastener clamping on the neck of the pin so that the pin cannot be removed from the secured lock.

Preferably the first member is substantially hollow. This enables the finished structure to be light. The locator is preferably supported by the first member at a plurality of positions in the member. This enables a strong, rigid joint to be formed.

Preferably the first and second members are structural components of an item of furniture. The ability to adjust the structural components of an item of furniture, after they have been assembled enables furniture to be precisely fitted. The structure may also be self supporting as it is assembled, taking a good deal of strain out of the assembly.

Preferably the first and second members are made of aluminium. This enables the finished structure to be light. Aluminium is easily coated or vinyl wrapped to achieve the look of wood, or may be anodised for a funky modern feel.

Advantageously the lock is made of a plastics material. It may thus be formed into a complex shape as required by the shape of the members, and the relative movement between them that must be achieved. The fastener may be made of metal. This provides a secure and strong fixing.

This invention also provides a method of assembling a first member and a second member, comprising: moving the first member with respect to the second member, until approximately the desired relative positions are achieved; releasably fixing the first member to a lock associated with and moveable with respect to the second member; making final adjustments to their relative positions; and securing the lock to prevent further relative movement between the first member and the second member.

There will now be given a detailed description, to be read with reference to the accompanying drawings, of a furniture fixing which is a preferred embodiment of this invention, having been selected for the purposes of illustrating the invention by way of example.

In the accompanying drawings:
**Figure 1** shows schematically a prior art cam fastening mechanism utilised in the fixing of the invention, in its locked position;
**Figure 2** shows schematically an exploded perspective view of a fixing according to the invention;
**Figure 3** shows schematically a front view of the fixing of Figure 2 with the lock secured;
**Figure 4** shows schematically a front view of the underside of the lock of Figure 2.

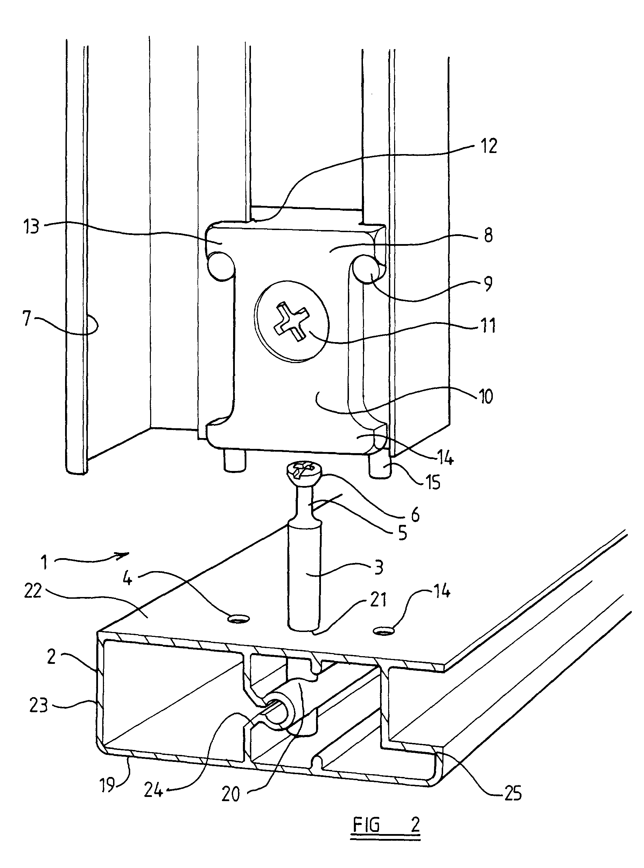

In Figure 2 a fixing 1 is shown with the components aligned in a suitable position from which they may be placed together and secured. In a typical application it forms part of a self assembly furniture kit.

A first member 2 comprises a hollow section of extruded aluminium. The section has two, generally parallel longitudinally extending walls, being a bottom wall 19 and a top wall 22. The walls 19, 22 are joined at or near their edges by longitudinally extending side walls 23, 25 which are generally perpendicular to the walls 19, 22. One of the side walls 25 is stepped to define a channel in the outer surface of the aluminium extrusion. A further intermediate wall 24 is positioned at or near the centre of bottom wall 19 and top wall 22 and extends between them along their lengths. The intermediate wall 24 not only joins the top wall 22 and bottom wall 19 but, at approximately its mid-point, has a projection 20, which extends along the length of the wall 24 in a direction generally parallel to the top wall 22 and the bottom wall 19.

The top wall 22 has three holes 4, 21, 24 arranged in a substantially straight line. A locator in the form of a pin 3 extends through the middle hole 21, and is securely attached to the first member 2. The pin 3 is of generally elongate cylindrical form, with a narrow neck section 5 below a wider top or head section 6. It is secured by a threaded attachment at the projection 20 of the intermediate wall 25 (alternative attachments, such as a circlip could be used). The pin 3 is supported at this attachment, and also by the middle hole 21, which is a clearance hole. The pin 3 extends substantially orthogonally to the top wall 22 of the first member 2.

Since the pin 3 is supported at a plurality of positions, specifically the projection 20 and the clearance hole 21, any bending moment applied to the head of the pin 6 can be countered by forces at both of these positions, meaning that the pin 3 is relatively rigidly attached to the first member 2.

A second member 7 is also a hollow elongate structure formed from extruded aluminium. The main section of the member resembles a "c". Slideably mounted on the prongs of the "c" section, adjacent one end of the second member 7, is a lock 8. Two pegs 9 protrude from either prong of the "c" section, perpendicular to its length, and close to one of the ends of the second member 7.

The lock 8 is of generally parallelepiped form. It comprises a body 10, made from a fibre filled plastics material and a cam fastener 11, made from a metal, and contained within the body 10. The pin 3 and the cam fastener 11 are a known type of fixing such as those sold under the name Camlock® . Grooves 12 on opposite sides of the body 10 allow the lock 8 to slide along the prongs of the "c" section of the second member 7. Two hooks 13 are formed in two corners of one end of the body 10, and two steps 14 are formed in the two opposite corners. The lock 8 is positioned in the second member 7 so that the stepped end is closest to that end of the second member 7. Indeed when the lock 8 is slid so that the hooks 13 abut the pegs 9 the underside of the lock 8 is level with the end of the second member 7. The steps 14 and the hooks 13 abut the pegs 9 when the lock 8 is slid to either end of its range of motion.

Two posts 15 protrude from the end of the body 10 of the lock 8 with the steps 14. This is the underside of the lock 8, as illustrated in Figure 2. The posts 15 are generally cylindrical in form. They are positioned either side of an opening 16 (shown in Figure 4) in the underside of the lock 8.

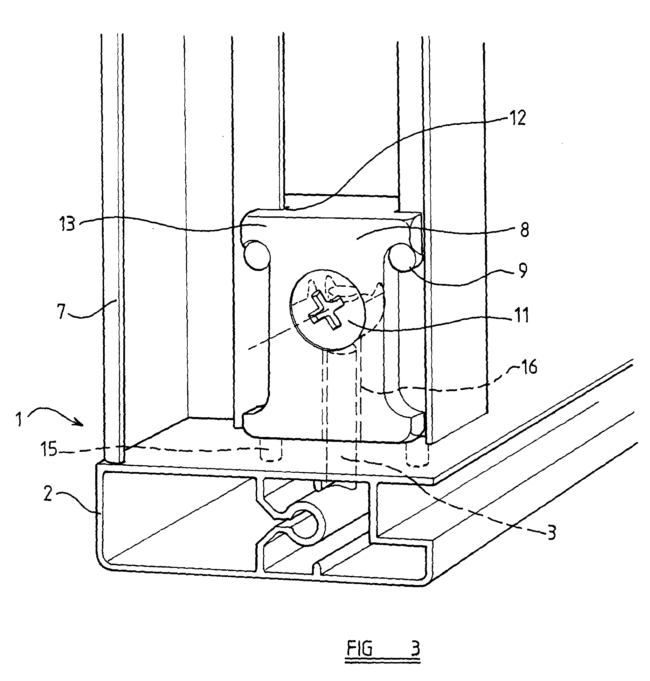

Figure 3 shows the first and second members secured and locked to each other. The pin 3 locates in the opening 16 on the underside of the lock 8 as the second member 7 is brought towards the first member 2. As the two members are brought more closely together, if the cam fastener 11 is in its open position, the head of the pin 3 passes into the cam fastener 11.

The posts 15 on the underside of the lock 8 then locate in respective holes 4 on the first member 2. The posts 15 form an interference fit in the holes 4, enabling the first member 2 and second member 7 to be held reasonably securely relative to each other when the posts 15 engage. The posts 15 also prevent rotation of the two members, and play a part in securing the lock 8.

When the lock 8 is positioned with the tops of the posts 15 just engaged with the holes 4, the second member 7 can be moved with respect to the first member 2. It may be moved until the pegs 9 abut the hooks 13 of the lock 8. The two members 2, 7 remain secured relative to each other throughout this movement.

When the members 2, 7 have been adjusted to their desired positions the cam fastener 11 may be activated by turning it through ninety degrees. This enables the cam fastener 11, situated inside the body 10 of the lock 8, to secure the neck of the pin 3, as shown in Figure 3. A very strong, rigid joint may thus be produced.

Figure 4 shows a front view of the underside of the lock 8, engaged in the second member 2. The cam fastener 11 is drawn as a broken line in the Figure. The opening 16 is near the midpoint of the base of the lock 8, and leads to the cam fastener 11.

The cam fastener 11 is shown engaged in its locked position with the pin 3 in Figure 1. It comprises a face 17, and two discs 18. The discs 18 are spaced apart at a distance less that the diameter of head 6 of the pin 3 but more than the diameter of neck 5 of the pin 3. They are arctuate in form, their arcs sweeping out about two thirds of a circle. Approximately one third of circle is therefore not occupied by the discs 17. When the fastener 11 is in this position the pin 3 may slide into it until the pin head 6 abuts the centre of the fastener. When the fastener 11 is turned, the discs 17 move into position and prevent removal of the pin 3. The two members may thus be locked together. This is the position shown in Figure 1.

Even when the pin head 6 just rests in the cam fastener 11, the frictional fit, combined with the interference fit of the posts 15 in holes in the first member 2 enables the two members to be held reasonably securely whilst their final relative position is adjusted.

In this way a secure, releasable locking facility is provided to link two members, whilst making provision for small adjustments while the members are secured together to optimise their relative positioning.

Although the example above illustrates one use of the invention as a furniture fixing, many other uses are possible, such as partitioning, exhibition stands, door frames, etc..

The body 10 may be made of other materials, such as non-fibre filled plastics, metals etc., and the pin 3 and cam fastener 11 may be made from materials other than metal.

Furthermore, the fixing may be used with members made from other materials and made other than by extrusion; for example it may be used with steel section members, or even with wood. The members need not be hollow.

In the present specification "comprise" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A fixing for releasably securing a first member (2) to a second member (7) comprising:
a locator (3) extending from the first member (2); and a fastener (11); **characterised in that** it further comprises
a lock (18) having a body which contains the fastener (11), and an opening (16) for receipt of the locator (3) and which is moveable with respect to the second member (7) between a first position in which the locator (3) is not within the opening (16), and a second position in which the locator (3) is engaged in the opening (16);
in which the action of securing the lock (8) retains the locator (3) in place within the fastener (11) and secures the lock in relation to the second member (7).

2. A fixing according to Claim 1 **characterised in that** the lock (8) is slideably mounted with respect to the second member (7).

3. A fixing according to any preceding claim **characterised in that** the lock body further comprises locating protrusions (15) which locate in respective openings (4) in the first member when the lock is in its second position.

4. A fixing according to Claim 3 **characterised in that** the protrusions (15) are an interference fit in the openings (4).

5. A fixing according to any preceding claim **characterised in that** it further comprises formations (9) on the second member (7) that the lock (8) abuts in its second position and is locked against.

6. A fixing according to Claim 5 **characterised in that** it further comprises corresponding formations (13, 14) on the lock body which constrain movement of the lock (8) with respect to the second member (7).

7. A fixing according to any preceding claim **characterised in that** the locator (3) is a pin of generally elongate cylindrical form, which may be received into the opening (16) in the lock body.

8. A fixing according to Claim 7 **characterised in that** the pin (3) has a head (6) and a neck (5) and is so constructed that the head may pass into the fastener when the lock is unlocked, and securing the lock (8) involves the fastener (11) fastening on the neck (5) of the pin so that the head (6) of the pin (3) may not pass back when the lock (8) is locked.

9. A fixing according to any preceding claim in which the first member (7) is substantially hollow, and the locator is supported by the first member (7) at a plurality of positions in the member (7).

10. A fixing according to any preceding claim in which the first and second members (2, 7) are structural components of an item of furniture.

11. A fixing according to any preceding claim in which the first and second members (2, 7) are made of aluminium.

12. A lock for use in a fixing device according to any previous claim.

13. A method of assembling a first member (2) and a second member (7), **characterised in that** it comprises:
moving the first member (2) with respect to the second member (7), until approximately the desired relative positions are achieved;
releasably fixing the first member (2) to a lock (8) associated with and moveable with respect to the second member (7);
making final adjustments to their relative positions; and
securing the lock (8) to prevent further relative movement between the first member (2) and the second member (7).
